# FASCICULE DE BREVET EUROPEEN

(11) **EP 2 268 499 B1**
(45) Date de publication et mention de la délivrance du brevet: **11.09.2013**
(21) Numéro de dépôt: 09742246.3
(22) Date de dépôt: 06.04.2009
(51) Int. Cl.: B60K 35/00, B60K 37/02

(54) **PIECE D'EQUIPEMENT INTERIEUR DE VEHICULE AUTOMOBILE ET PROCEDE DE FABRICATION ASSOCIE**
INNENAUSSTATTUNGSTEIL FÜR KRAFTFAHRZEUG UND VERFAHREN ZU SEINER HERSTELLUNG
PIECE OF MOTOR VEHICLE INTERIOR EQUIPMENT AND ASSOCIATED METHOD OF MANUFACTURE

(30) Priorité: 07.04.2008 FR 0852303
(43) Date de publication de la demande: 05.01.2011
(73) Titulaire: Faurecia Intérieur Industrie, 92000 Nanterre (FR)
(72) Inventeur: BEAU, Godefroy, F-92250 La Garenne Colombes (FR); OEUVRARD, Jean-François, F-95300 Pontoise (FR)
(74) Mandataire: Blot, Philippe Robert Emile
(86) Numéro de dépôt international: PCT/FR2009/050580
(87) Numéro de publication internationale: WO 2009/136048

(56) Documents cités:
- DE-A1-102005 036 533
- FR-A- 2 824 510
- US-A- 5 558 364
- US-A1- 2001 030 871

## Description

La présente invention concerne une pièce d'équipement intérieur de véhicule automobile selon le préambule de la revendication 1.

Une telle pièce est destinée à former par exemple une planche de bord de véhicule automobile ou plus généralement un panneau d'habillage intérieur de ce véhicule destiné à habiller par exemple une porte, un plafond, ou un plancher du véhicule.

On connaît de FR-A-2 824 510 une pièce d'équipement du type précité, qui comprend une armature de support rigide, une peau extérieure souple translucide, et une couche de mousse translucide, interposée entre l'armature de support et la peau extérieure. La pièce comprend en outre un ensemble d'affichage qui comporte un dispositif d'illumination constitué par des ampoules et un masque délimitant un pictogramme.

L'ensemble d'illumination est placé à l'intérieur de la pièce pour illuminer la surface extérieure de la peau depuis la surface intérieure de la peau à travers la peau et la couche de mousse.

Pour rendre la peau agréable au toucher, il est néanmoins nécessaire de disposer d'une couche de mousse d'épaisseur relativement importante entre le dispositif d'illumination et la peau.

Le dispositif d'illumination étant placé à l'arrière de la couche de mousse, cette disposition impose à la couche de mousse d'être translucide, ce qui présente l'inconvénient de diminuer la qualité et la netteté de l'image formée sur la peau, et d'augmenter le coût de la pièce. US 2001/0030871 décrit une pièce selon le préambule de la revendication 1.

Un but de l'invention est donc d'obtenir, à moindre coût, une pièce d'équipement intérieur automobile, agréable au toucher, et présentant un ensemble d'affichage d'un signal lumineux sur la surface extérieure de la peau avec une qualité et une netteté adéquates.

A cet effet, l'invention a pour objet une pièce selon la revendication 1.

La pièce selon l'invention peut comprendre une ou plusieurs des caractéristique(s) des revendications 2 à 7.

L'invention a également pour objet un procédé selon la revendication 8.

Le procédé selon l'invention peut comprendre une ou plusieurs des caractéristique(s) des revendications 9 et 10.

L'invention sera mieux comprise à la lecture de la description qui va suivre, donnée uniquement à titre d'exemple, et faite en se référant aux dessins annexés, sur lesquels:
- la Figure 1 est une vue partielle en coupe suivant un plan vertical longitudinal d'une première pièce d'équipement intérieur selon l'invention ;
- la Figure 2 est une vue en perspective de trois-quarts face de la pièce de la Figure 1, l'ensemble d'affichage occupant sa configuration désactivée ;
- la Figure 3 est une vue analogue à la Figure 2 dans une configuration activée de l'ensemble d'affichage ;
- la Figure 4 est une vue en coupe suivant un plan vertical d'un moule de fabrication de la pièce de la Figure 1, lors de la fabrication de cette pièce ;
- la Figure 5 est une vue analogue à la Figure 1 d'une deuxième pièce selon l'invention ;
- la Figure 6 est une vue analogue à la Figure 4 du moule de fabrication de la deuxième pièce ; et
- la Figure 7 est une vue analogue à la Figure 5 de la deuxième pièce, lors de la réparation de l'ensemble d'illumination.

Dans tout ce qui suit, les orientations sont généralement les orientations habituelles d'un véhicule automobile, ainsi les termes « supérieur », « inférieur », « haut », « bas », « gauche », « droite », « avant », « arrière » s'entendent par rapport au sens normal de circulation du véhicule et par rapport à la position d'un conducteur.

Les termes « intérieur » et « extérieur » s'entendent par rapport à la position de la pièce dans l'habitacle, « l'extérieur » étant dirigé vers un occupant du véhicule situé dans l'habitacle, « l'intérieur » étant dirigé à l'écart de cet occupant.

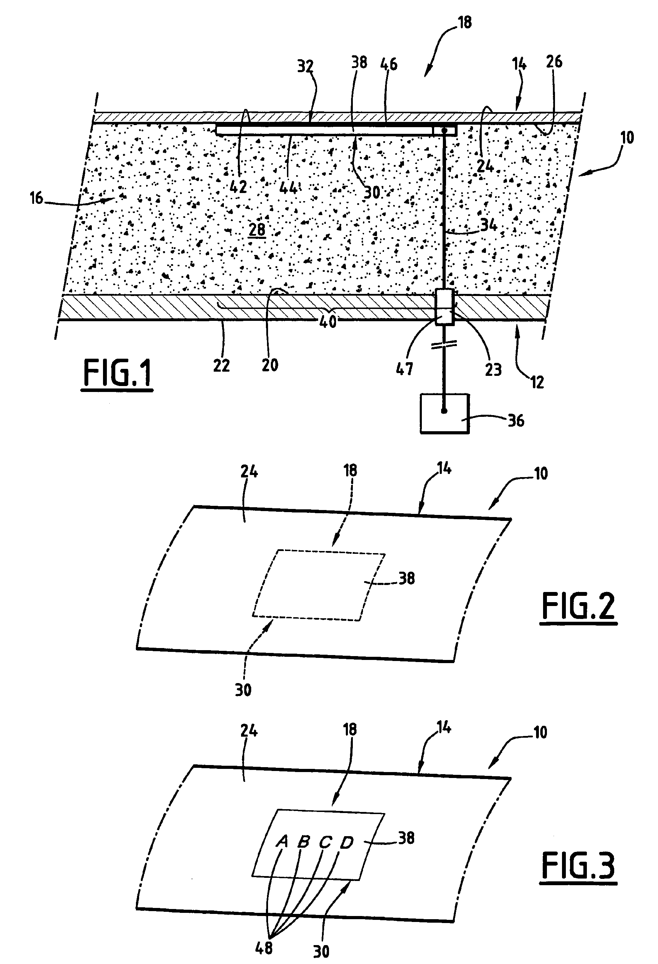

Une première pièce 10 d'équipement intérieur de véhicule automobile est représentée sur les Figures 1 à 3. Dans cet exemple, la pièce 10 est une planche de bord de véhicule automobile destinée à être placée dans l'habitacle du véhicule pour porter des instruments.

En variante, la pièce 10 est une pièce d'habillage intérieur comme par exemple un panneau de porte, de plafond, ou de plancher de véhicule.

Comme illustré par la Figure 1, la pièce 10 comprend une armature intérieure de support rigide 12, une peau extérieure d'aspect souple 14 et une couche de mousse 16 interposée entre l'armature de support 12 et la peau extérieure d'aspect 14 pour relier l'armature 12 à la peau 14.

La pièce 10 comprend en outre un ensemble 18 d'affichage d'au moins un signal lumineux sur la peau 14.

L'armature 12 est destinée à être fixée sur les éléments de caisse (non représentés) du véhicule. Elle est par exemple réalisée en matière thermoplastique oléfinique, homopolymère ou copolymère, comprenant éventuellement des charges minérales ou un renforcement par des fibres de verre. Elle peut être réalisée en ABS-PC (acrylonitryle-butadiène-styrène et polycarbonate) éventuellement renforcée par des fibres de verre. Ces matériaux ont une rigidité permettant de remplir une fonction de support.

L'armature 12 délimite une surface extérieure 20 sur laquelle est rapportée la couche de mousse 16 et une surface intérieure 22. L'épaisseur de l'armature 12, prise entre les surfaces 20, 22, perpendiculairement à ces surfaces est par exemple comprise entre 1 mm et 5 mm.

L'armature 12 délimite, en regard de l'ensemble d'affichage 18, une ouverture de passage 23 pour le raccordement électrique de l'ensemble d'affichage 18. Cette ouverture 23 débouche dans la surface extérieure 20 et dans la surface intérieure 22.

La peau extérieure d'aspect 14 est destinée à être placée en regard d'un utilisateur du véhicule automobile. Elle est par exemple formée en thermoplastique élastomère tel que du thermoplastique polyuréthane (PTU) ou du thermoplastique polyoléfine (PTO). Avantageusement, la peau 14 est réalisée à base de polychlorure de vinyle souple (PVC), de caoutchouc ou de silicone.

La peau 14 présente une surface extérieure 24 d'aspect destinée à être visible par un utilisateur du véhicule automobile et une surface intérieure 26 rapportée sur la couche de mousse 16.

L'épaisseur de la peau 14, prise entre la surface extérieure 24 et la surface intérieure 26 est par exemple comprise entre 1 mm et 20 mm.

Selon l'invention, la peau 14 est déformable au toucher, lorsque le doigt d'un utilisateur appuie sur la surface extérieure 24. En outre, la peau 14 est translucide, de sorte que le coefficient de transmission de la lumière depuis la surface intérieure 26 jusqu'à la surface extérieure 24 est non nul et inférieur à 30%.

La surface intérieure 26 de la peau 14 et la surface extérieure 20 de l'armature 12 délimitent entre elles un volume intérieur dans lequel sont disposés la couche de mousse 16 et au moins partiellement l'ensemble d'affichage 18.

La couche de mousse 16 est par exemple réalisée à base de polyuréthane expansé. Dans l'exemple représenté sur la Figure 1, la couche de mousse 16 s'étend continûment et d'un seul tenant dans le volume intérieur 28 entre la surface extérieure 20 de l'armature et la surface intérieure 26 de la peau 14.

Selon l'invention, l'ensemble d'affichage 18 comprend un dispositif d'illumination souple 30, destiné à illuminer, à travers la peau 14, une région choisie de la surface extérieure 24 depuis la surface intérieure 26.

L'ensemble d'affichage 18 comprend en outre des moyens 32 de fixation du dispositif d'illumination 30 contre la surface intérieure 26, au moins un faisceau 34 de fils de raccordement électrique du dispositif d'illumination 30 s'étendant à travers la couche de mousse 16 et à travers l'ouverture 23, et des moyens 36 d'alimentation électrique et de commande du dispositif d'illumination 30, disposés hors du volume intérieur 28 et raccordés électriquement au dispositif 30 par l'intermédiaire du faisceau de fils 34.

Dans l'exemple représenté sur la Figure 1, le dispositif d'illumination 30 est formé par un écran matriciel 38 comprenant une pluralité de pixels destinés à être illuminés sélectivement. L'écran 38 comprend par exemple une pluralité de diodes électroluminescentes, avantageusement des diodes électroluminescentes organiques désignées par l'acronyme anglais « OLED ». En variante, l'écran présente des segments lumineux.

L'écran 38 est souple pour être déformable au toucher lorsqu'un utilisateur appuie sur la surface extérieure 24 de la peau 14 vers l'armature 12 en regard de l'écran 38.

Le dispositif d'illumination 30 présente une faible épaisseur, inférieure à 50% de l'épaisseur de la couche de mousse 16 en regard de l'écran 38. De préférence, l'épaisseur du dispositif d'illumination est inférieure à 10% de l'épaisseur de la couche de mousse, dans la région 40 de la couche de mousse située en regard de l'écran 38.

L'écran 38 présente une surface supérieure 42 fixée sur la surface intérieure 26 de la peau 14 par l'intermédiaire des moyens de fixation 32 et une surface intérieure 44 fixée sur la couche de mousse dans la région 40 de cette couche interposée entre le dispositif d'illumination 30 et l'armature de support 12.

Comme on le verra plus bas, les pixels de l'écran matriciel 38 sont aptes à illuminer la surface extérieure 24 de la peau 14 par rétroéclairage à travers la peau 14 depuis la surface intérieure 26 vers la surface extérieure 24.

Les moyens de fixation 32 comprennent une couche 46 de colle interposée entre la surface intérieure 26 et la surface extérieure 42. Cette colle est par exemple une colle polyuréthane souple translucide. La couche de colle 46 est déformable à température ambiante pour autoriser un déplacement relatif de l'écran 38 par rapport à la peau 14, par cisaillement le long des surfaces 26, 42 lorsqu'un utilisateur du véhicule appuie sur la surface extérieure 24 de la peau 24. La colle déformable assure une homogénéité de toucher et empêche la rigidification de la peau 14 par l'écran 38.

Le faisceau de fils 34 s'étend sensiblement perpendiculairement à l'écran 38 à travers la couche de mousse et à travers l'ouverture 23 avec interposition d'un joint d'étanchéité 46 dans l'ouverture 23.

Les moyens de commande 36 sont aptes à alimenter électriquement et sélectivement chaque pixel ou segment de l'écran 38 pour provoquer son illumination par l'intermédiaire du faisceau de fils 34.

Ainsi, l'ensemble d'affichage 18 est activable entre une configuration de repos éteinte, représentée schématiquement sur la Figure 2 et une configuration d'illumination active représentée sur la Figure 3.

Dans la configuration de repos, aucun pixel de l'écran 38 n'est illuminé. La peau 14 étant seulement partiellement translucide, le dispositif d'illumination 30 est invisible depuis la surface extérieure de la peau 24 qui masque le dispositif d'illumination 30.

Dans la configuration active, représentée sur la Figure 3, des pixels de l'écran 18 ont été activés et éclairent des régions choisies 48 de la surface extérieure 24 depuis la surface extérieure 26 à travers la couche de colle 46 et la peau 14.

Il est ainsi possible de former une image de grande qualité et de grande netteté sur la surface extérieure 24 de la peau, compte tenu de la faible distance qui sépare l'écran d'illumination 38 de la surface 24.

En outre, en l'absence d'illumination, la peau extérieure 14 présente un aspect continu depuis l'habitacle du véhicule et conserve un toucher très agréable compte tenu de la déformabilité du dispositif d'illumination 30 et de la couche de mousse 28 située derrière le dispositif d'illumination 30.

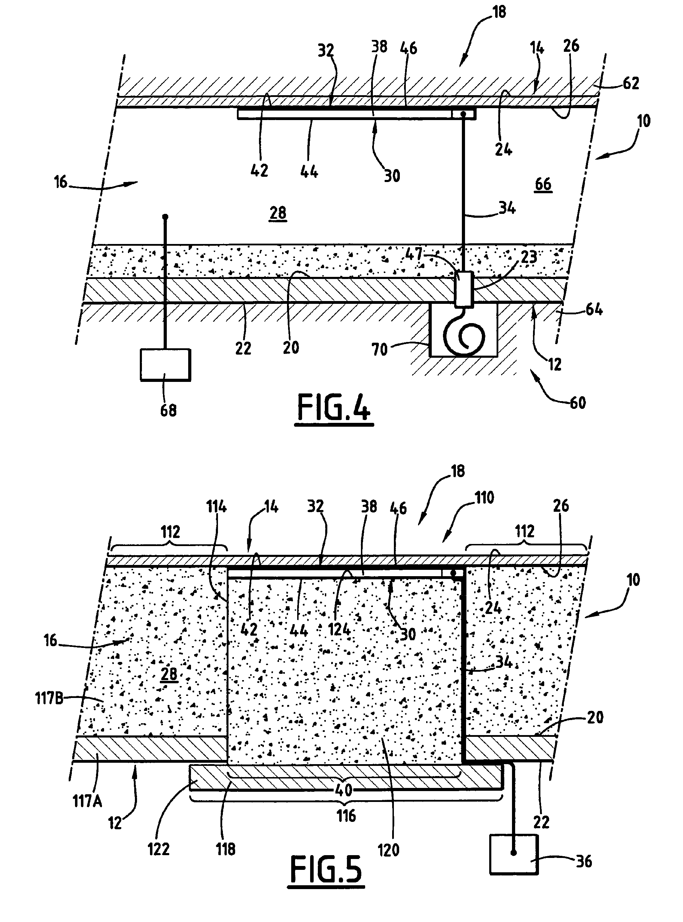

La première pièce 10 selon l'invention est fabriquée dans un moule de moussage 60 représenté partiellement et schématiquement sur la Figure 4.

Ce moule 60 comprend un demi-moule supérieur 62 de support de la peau et un demi-moule inférieur 64 de support de l'armature, le demi-moule supérieur 62 et le demi-moule inférieur 64 délimitant entre eux une cavité de moussage 66.

Le moule 60 comprend en outre des moyens 68 d'injection d'un matériau moussant dans la cavité de moussage 66.

Le procédé de fabrication de la première pièce 10 selon l'invention va maintenant être décrit. Initialement, ce procédé comprend la fourniture d'une armature 12 et d'une peau extérieure d'aspect 14. L'armature 12 est insérée dans le moule 60 en étant appliqué contre le demi-moule inférieur 64, alors que la peau 14 est insérée dans la cavité de moussage 66 en appliquant sa surface extérieure 24 contre le demi-moule supérieur 62.

Puis, la couche de colle 46 est appliquée sur l'écran 38 et l'écran 38 est fixé sur la peau par l'intermédiaire de la couche de colle 46. Le faisceau de fils 34 est alors tiré dans le volume 28 vide entre l'écran 38 et l'orifice 23 avec interposition du joint d'étanchéité 72, puis hors du moule 60 dans un logement 70 prévu à cet effet.

Dans cette configuration, la surface intérieure 26 de la peau et la surface extérieure 20 de l'armature 12 délimitent entre eux dans la cavité de moussage 66 le volume intérieur 28, lequel est sensiblement vide.

Puis, les moyens d'injection 68 sont activés pour injecter du matériau moussant dans le volume intérieur 28. Le matériau moussant subit alors une expansion pour remplir la totalité du volume intérieur 28 et raccorder la surface extérieure 20 de l'armature 12 à la surface intérieure 28 de la peau 14.

Le durcissement du matériau moussant conduit à la formation de la couche de mousse 16 qui présente une région 40 s'étendant en regard de l'écran 38, entre l'armature 12 et l'écran 38. Cette région 40 présente une épaisseur non nulle et sensiblement comprise entre 1 mm et 20 mm.

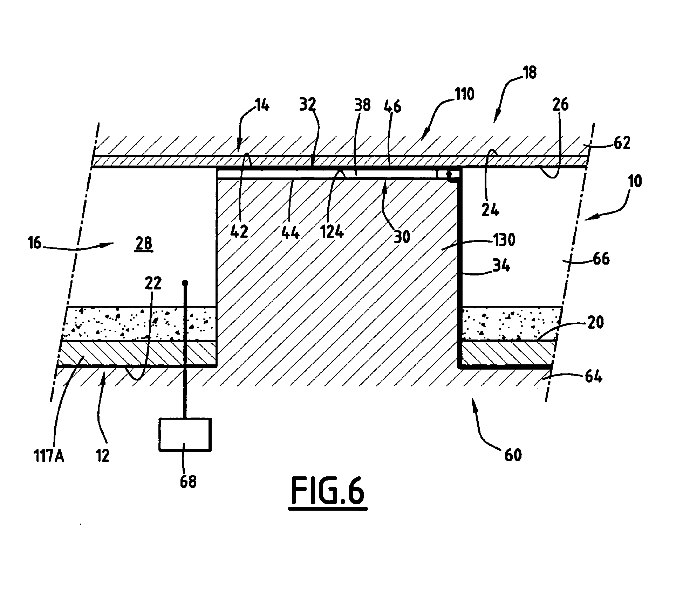

Une deuxième pièce 110 d'équipement intérieur selon l'invention est représentée sur les Figures 5 à 7. A la différence de la première pièce, l'armature 12 et la couche de mousse 16 forment une région périphérique 112 délimitant une cavité 114 d'accès au dispositif d'illumination 32, et une région centrale 116 de forme sensiblement complémentaire à la cavité 114, rapportée dans la cavité 114.

La cavité 114 présente une section sensiblement constante supérieure ou sensiblement égale à la section horizontale de l'écran 38. Elle est délimitée par une paroi périphérique formée depuis l'extérieur vers l'intérieur successivement par la couche de mousse 16 et par l'armature 12. La cavité 114 débouche intérieurement, à l'opposé de la peau 14. Le fond de la cavité 114 est délimité par l'écran 38.

La région périphérique 112 comprend une partie 117A périphérique d'armature et une partie 117B périphérique de mousse.

La région centrale 116 comprend une partie 118 centrale d'armature, de section supérieure à la section de la cavité 114, et une partie de mousse 120 de section égale à celle de la cavité 114 pour remplir sensiblement totalement la cavité 114.

La partie centrale d'armature 118 délimite un rebord périphérique 122 destiné à être appliqué contre la partie périphérique d'armature 117A de la région périphérique 112.

La partie centrale de mousse 120 présente une surface extérieure 124 destinée à être appliquée contre l'écran 38 comme on le verra plus bas.

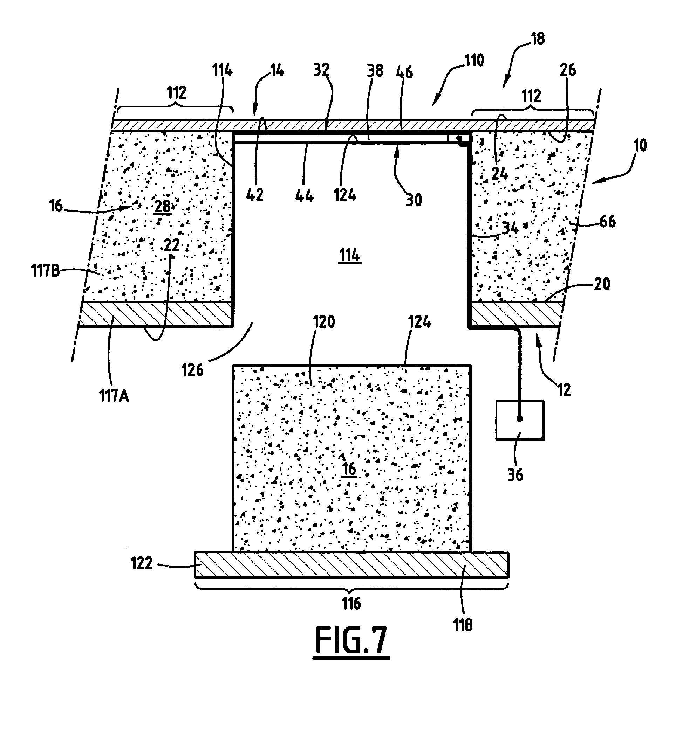

La région centrale 116 est ainsi fixée de manière amovible sur la région périphérique 112 entre une configuration montée, représentée sur la Figure 5, et une configuration démontée, représentée sur la Figure 7.

Dans la configuration montée représentée sur la Figure 5, le rebord 122 est fixé sur la partie d'armature 117A périphérique. La partie centrale de mousse 120 est insérée dans la cavité 114 pour que sa surface supérieure 124 soit appliquée contre l'écran 38. Le faisceau de fils 34 est interposé entre la région périphérique 112 et la région centrale 116 le long de l'interface entre ces régions.

Dans cette configuration, la partie centrale de mousse 120 forme la région 40 de la couche de mousse interposée entre le dispositif d'illumination 30 et l'armature 12.

La couche de mousse 16 est alors réalisée en plusieurs parties 117B, 120 assemblées entre elles.

Dans la configuration démontée représentée sur la Figure 7, la région centrale 116 a été extraite de la cavité 114 et a été placée à l'écart de celle-ci. Un opérateur peut alors accéder à l'écran 38 pour le réparer ou le démonter à travers la cavité 114 qui débouche intérieurement dans l'ouverture 126 délimitée par la partie périphérique d'armature 117A.

Le moule 60 de fabrication de la deuxième pièce 110 diffère du moule 60 de fabrication de la première pièce en ce que le demi-moule 64 de support de l'armature comprend une saillie 130 de forme complémentaire à celle de la cavité 114, destinée à s'appliquer contre l'écran 38 lorsque le moule 60 est fermé. En outre, le moule 60 comprend une région (non représentée) de formation de la région centrale 116 comprenant une cavité additionnelle de moussage, de forme complémentaire à la partie centrale de mousse 120.

Le procédé de fabrication de la deuxième pièce 110 diffère du procédé de fabrication de la première pièce 10 en ce que la saillie 130 s'insère dans la cavité de moussage 66 pour empêcher l'expansion du matériau moussant dans la région occupée par la saillie 130. Ainsi, lors du moussage, le matériau moussant subit une expansion autour de la saillie 130 formant ainsi la partie périphérique 117B de mousse et délimitant la cavité de moussage 114 dans l'espace libéré par la saillie 130 lors de l'ouverture du moule 60.

Par ailleurs, la région centrale 116 est formée dans une autre partie du moule. Le procédé comprend ultérieurement une étape d'insertion de la région centrale 116 dans la cavité 114, et une étape de fixation de la région centrale 116 sur la région périphérique 112.

En variante (non représentée), le dispositif d'illumination 30 comprend un masque appliqué sur la surface intérieure 26 de la peau, le masque délimitant au moins un pictogramme, et une source de lumière apte à illuminer le pictogramme du masque pour créer un signal lumineux analogue au pictogramme sur la surface extérieure 24.

La source de lumière peut être une feuille souple électroluminescente ou un réseau de fibres optiques en matériau souple (PMMA, PU).

## Revendications

1. Pièce (10 ; 110) d'équipement intérieur de véhicule automobile, du type comprenant :
- une armature (12) de support rigide ;
- une peau (14) extérieure d'aspect souple, au moins partiellement translucide, la peau extérieure (14) présentant une surface extérieure (24) destinée à être placée en regard d'un occupant du véhicule automobile, et une surface intérieure (26) ;
- une couche de mousse (16) interposée entre l'armature de support (12) et la peau extérieure (14) ;
- un ensemble (18) d'affichage d'au moins un signal lumineux sur la surface extérieure (24) de la peau, l'ensemble d'affichage (18) comprenant au moins un dispositif (30) d'illumination à travers la peau, depuis la surface intérieure (26) de la peau, d'une région (48) choisie de la surface extérieure (24) de la peau, le dispositif d'illumination étant fixé sur la surface intérieure (26) de la peau, la peau (14) couvrant le dispositif d'illumination (30),
**caractérisée en ce que** le dispositif d'illumination (30) est souple pour être déformable au toucher, une région (40) de la couche de mousse (16) étant interposée entre l'armature de support (12) et le dispositif d'illumination (30).

2. Pièce (10; 110) selon la revendication 1, **caractérisée en ce que** le dispositif d'illumination comprend un écran (38) matriciel d'affichage ou à segments.

3. Pièce (10 ; 110) selon la revendication 1 ou 2, **caractérisée en ce que** le dispositif d'illumination (30) comprend un masque délimitant au moins un pictogramme et une source de lumière apte à illuminer le pictogramme du masque.

4. Pièce (10 ; 110) selon l'une quelconque des revendications précédentes, **caractérisée en ce que** le dispositif d'illumination souple (30) présente une épaisseur, prise perpendiculairement à une surface directrice (24) de la peau, inférieure à 50% de l'épaisseur de la couche de mousse (16), prise perpendiculairement à une surface directrice (24) de la peau.

5. Pièce (10; 110) selon l'une quelconque des revendications précédentes, **caractérisée en ce que** le dispositif d'illumination souple (30) est fixé sur la surface intérieure (26) de la peau par l'intermédiaire d'une colle d'interface flexible apte à se déformer localement lors d'une déformation au toucher de la peau (14) pour permettre un déplacement local du dispositif d'illumination (30) par rapport à la surface intérieure (26) en regard.

6. Pièce (10) selon l'une quelconque des revendications précédentes, **caractérisée en ce que** la couche de mousse (16) est réalisée d'un seul tenant.

7. Pièce (110) selon l'une quelconque des revendications 1 à 5, **caractérisée en ce que** l'armature (12) et la couche de mousse (16) comprennent une région périphérique (112) délimitant une cavité (114), le fond de la cavité (114) étant délimité au moins partiellement par le dispositif d'illumination (30), l'armature (12) et la couche de mousse (16) comprenant une région centrale (116) de forme sensiblement complémentaire à la cavité (114), la région centrale (116) étant rapportée de manière amovible sur la région périphérique (112).

8. Procédé de fabrication d'une pièce (10 ; 110) d'équipement intérieur de véhicule automobile, du type comprenant les étapes suivantes :
• fourniture d'une armature (12) de support rigide et d'une peau (14) extérieure d'aspect souple, au moins partiellement translucide, la peau extérieure (14) présentant une surface extérieure (24) destinée à être placée en regard d'un occupant du véhicule automobile, et une surface intérieure (26) ;
• montage d'un ensemble d'affichage (18) d'au moins un signal lumineux sur la surface extérieure (24) de la peau, le montage comprenant la fourniture d'un dispositif d'illumination (30) à travers la peau, depuis la surface intérieure (26) de la peau, d'une région choisie (48) de la surface extérieure (24) de la peau, le dispositif d'illumination (30) étant souple pour être déformable au toucher, et la fixation du dispositif d'illumination (30), sur la surface intérieure (26) de la peau ;
• placement d'une couche de mousse (16) entre l'armature de support (12) et la peau extérieure (14), une région (40) de la couche de mousse (16) étant interposée entre l'armature de support (12) et le dispositif d'illumination (30).

9. Procédé selon la revendication 8, **caractérisé en ce que** l'étape de placement comprend :
- l'introduction d'un matériau moussant dans le volume intérieur (28) défini entre la surface intérieure (26) de la peau et l'armature (12), et
- l'expansion et le durcissement du matériau moussant pour former la couche de mousse (16).

10. Procédé selon la revendication 9, **caractérisé en ce qu'**avant l'étape d'introduction du matériau moussant dans le volume intérieur (28), l'étape de placement comprend l'introduction d'une saillie (130) dans le volume intérieur (28) en regard du dispositif d'illumination (30), l'armature (12) et la couche de mousse (16) délimitant, après durcissement du matériau moussant, une cavité (114) dans l'espace occupée par la saillie (130) lors de l'étape de moussage, l'étape de placement comprenant en outre la fourniture d'une région centrale (116) de la couche de mousse (16) et de l'armature (12) de forme sensiblement complémentaire à celle de la cavité (114) et la fixation amovible de la région centrale (116) dans la cavité (114).

## Patentansprüche

1. Innenausstattungsteil (10; 110) für ein Kraftfahrzeug, des Typ aufweisend:
- eine steife Stützstruktur (12);
- eine weiche Außenerscheinungsbildhaut (14), die zumindest partiell lichtdurchlässig ist, wobei die Außenhaut (14) eine äußere Fläche (24), die dazu vorgesehen ist, um einem Kraftfahrzeuginsassen zugewandt platziert zu sein, und eine innere Fläche (26) hat,
- eine Schaumschicht (16), die zwischen der Stützstruktur (12) und der Außenhaut (14) angeordnet ist,
- eine Einrichtung (18) zum Anzeigen wenigstens eines Lichtsignals an der äußeren Fläche (24) der Haut, wobei die Anzeigeeinrichtung (18) wenigstens eine Vorrichtung (30) aufweist zur Beleuchtung, durch die Haut hindurch ausgehend von der inneren Fläche (26) der Haut, eines ausgewählten Bereichs (48) der äußeren Fläche (24) der Haut, wobei die Beleuchtungsvorrichtung an der inneren Fläche (26) der Haut befestigt ist, wobei die Haut (14) die Beleuchtungsvorrichtung (30) abdeckt, **dadurch gekennzeichnet, dass** die Beleuchtungsvorrichtung (30) weich ist, um beim Berühren deformierbar zu sein, wobei ein Bereich (40) der Schaumschicht (16) zwischen der Stützstruktur (12) und der Beleuchtungsvorrichtung (30) angeordnet ist.

2. Teil (10; 110) gemäß Anspruch 1, **dadurch gekennzeichnet, dass** die Beleuchtungsvorrichtung einen Matrizen- oder Segmente-Anzeigebildschirm (38) aufweist.

3. Teil (10; 110) gemäß Anspruch 1 oder 2, **dadurch gekennzeichnet, dass** die Beleuchtungsvorrichtung (30) aufweist eine Maske, die wenigstens ein Piktogramm begrenzt, und eine Lichtquelle, die in der Lage ist, das Piktogramm der Maske zu beleuchten.

4. Teil (10; 110) gemäß einem der vorhergehenden Ansprüche, **dadurch gekennzeichnet, dass** die weiche Beleuchtungsvorrichtung (30) eine Dicke hat, genommen senkrecht zu einer Hauptfläche (24) der Haut, die kleiner als 50% der Dicke der Schaumschicht (16) ist, genommen senkrecht zu einer Hauptfläche (24) der Haut.

5. Teil (10; 110) gemäß irgendeinem der vorhergehenden Ansprüche, **dadurch gekennzeichnet, dass** die weiche Beleuchtungsvorrichtung (30) an der inneren Fläche (26) der Haut befestigt ist durch Zwischenordnen von flexiblem Anschlusskleber, der in der Lage ist, sich lokal zu deformieren bei einer Berührungs-Deformation der Haut (14), um ein lokales Deplatzieren der Beleuchtungsvorrichtung (30) bezüglich der gegenüberliegenden inneren Fläche (26) zu erlauben.

6. Teil (10) gemäß irgendeinem der vorhergehenden Ansprüche, **dadurch gekennzeichnet, dass** die Schaumschicht (16) aus einem Stück gemacht ist.

7. Teil (110) gemäß irgendeinem der Ansprüche 1 bis 5, **dadurch gekennzeichnet, dass** die Struktur (12) und die Schaumschicht (16) einen peripheren Bereich (112) aufweisen, der eine Kavität (114) begrenzt, wobei der Boden der Kavität (114) zumindest partiell begrenzt ist von der Beleuchtungsvorrichtung (30), wobei die Struktur (12) und die Schaumschicht (16) einen zentralen Bereich (116) mit einer zu der Kavität (114) im Wesentlichen komplementären Form aufweisen, wobei der zentrale Bereich (116) in einer lösbaren Weise an dem peripheren Bereich (112) angebracht ist.

8. Verfahren zur Herstellung eines Innenausstattungsteils (10; 110) für ein Kraftfahrzeug, des Typs aufweisend die folgenden Schritte:
- Bereitstellung einer steifen Stützstruktur (12) und einer weichen Außenerscheinungsbildhaut (14), die wenigstens partiell lichtdurchlässig ist, wobei die Außenhaut (14) eine äußere Fläche (24), die dazu vorgesehen ist, um einem Kraftfahrzeuginsassen zugewandt angeordnet zu sein, und eine innere Fläche (26) aufweist,
- Montage einer Einrichtung (18), welche zum Anzeigen wenigstens eines Lichtsignals an der äußeren Fläche (24) der Haut ist, wobei die Montage umfasst die Bereitstellung einer Vorrichtung (30) zur Beleuchtung, durch die Haut hindurch ausgehend von der inneren Fläche (26) der Haut, eines ausgewählten Bereichs (48) der äußeren Fläche (24) der Haut, und die Befestigung der Beleuchtungsvorrichtung (30) an der inneren Fläche (26) der Haut,
- Platzierung einer Schaumschicht (16) zwischen der Stützstruktur (12) und der Außenhaut (14), wobei ein Bereich (40) der Schaumschicht (16) zwischen der Stützstruktur (12) und der Beleuchtungsvorrichtung (30) angeordnet ist.

9. Verfahren gemäß Anspruch 8, **dadurch gekennzeichnet, dass** der Platzierungs-Schritt aufweist:
- Einbringung eines Schaummaterials in das Innenvolumen (28), das zwischen der inneren Fläche (26) der Haut und der Struktur (12) definiert ist, und
- Expansion und Aushärtung des Schaummaterials zum Bilden der Schaumschicht (16).

10. Verfahren gemäß Anspruch 9, **dadurch gekennzeichnet, dass** vor dem Schritt der Einbringung des Schaummaterials in das Innenvolumen (28), der Platzierungs-Schritt umfasst die Einbringung eines Vorsprungs (130) in das Innenvolumen (28) gegenüber der Beleuchtungsvorrichtung (30), wobei die Struktur (12) und die Schaumschicht (16), nach dem Aushärten des Schaummaterials, eine Kavität (114) begrenzen in dem Raum, der während des Schäumungs-Schritts von dem Vorsprung (130) eingenommen ist, wobei der Platzierungs-Schritt ferner aufweist die Bereitstellung eines zentralen Bereichs (116) der Schaumschicht (16) und der Struktur (12) in einer Form, die zu jener der Kavität (114) im Wesentlichen komplementär ist, und die lösbare Befestigung des zentralen Bereichs (116) in der Kavität (114).

## Claims

1. A piece (10 ; 110) of motor vehicle interior equipment, of the type comprising:
- a rigid support frame (12);
- an external skin (14) of soft appearance, at least partially translucent, the external skin (14) having an exterior surface (24) intended to be placed facing an occupant of the motor vehicle and an interior surface (26);
- a layer of foam (16) inserted between the support frame (12) and the external skin (14);
- an assembly (18) for displaying at least one light signal on the exterior surface (24) of the skin, the display assembly (18) comprising at least one device (30) for illuminating, through the skin, from the interior surface (26) of the skin, a chosen region (48) of the exterior surface (24) of the skin, the illuminating device being fixed on the interior surface (26) of the skin, the skin (14) covering the illuminating device (30), **characterized in that** the illuminating device (30) is flexible so that it deforms when touched, a region (40) of the foam layer (16) being inserted between the support frame (12) and the illuminating device (30).

2. The piece (10; 110) according to claim 1, **characterized in that** the illuminating device comprises a matrix display or segment screen (38).

3. The piece (10; 110) according to claim 1 or 2, **characterized in that** the illuminating device (30) comprises a mask defining at least one pictogram and a light source capable of illuminating the pictogram of the mask.

4. The piece (10; 110) according to any one of the previous claims, **characterized in that** the flexible illuminating device (30) has a thickness, considered perpendicular to a guiding surface (24) of the skin, less than 50% of the thickness of the foam layer (16), considered perpendicular to a guiding surface (24) of the skin.

5. The piece (10; 110) according to any one of the previous claims, **characterized in that** the flexible illuminating device (30) is fixed on the interior surface (26) of the skin via a flexible interface glue capable of deforming locally when the skin (14) is deformed by touching to allow local movement of the illuminating device (30) with regards to the opposite interior surface (26).

6. The piece (10) according to any one of the previous claims, **characterized in that** the layer of foam (16) is made of a single piece.

7. The piece (110) according to any one of claims 1 to 5, **characterized in that** the frame (12) and the foam layer (16) comprise a peripheral region (112) defining a cavity (114), the bottom of the cavity (114) being at least partially defined by the illuminating device (30), the frame (12) and the layer of foam (16) comprising a central region (116) with a shape substantially complementary to the cavity (114), the central region (116) being removably attached on the peripheral region (112).

8. A method for manufacturing a piece (10; 110) of motor vehicle interior equipment, of the type comprising the following steps:
• providing a rigid support frame (12) and an external skin (14) of soft appearance, at least partially translucent, the external skin (14) having an exterior surface (24) intended to be placed facing an occupant of the motor vehicle, and an interior surface (26);
• mounting an assembly (18) for displaying at least one light signal on the exterior surface (24) of the skin, the mounting comprising providing a device (30) for illuminating, through the skin, from the interior surface (26) of the skin, a chosen region (48) of the exterior surface (24) of the skin, the illuminating device (30) being flexible so that it deforms when touched, and fixing the illuminating device (30), on the interior surface of the skin (26);
• placing a layer of foam (16) between the support frame (12) and the external skin (14), a region (40) of the foam layer (16) being inserted between the support frame (12) and the illuminating device (30).

9. The method according to claim 8, **characterized in that** the placement step comprises:
- introducing a foaming material into the interior volume (28) defined between the interior surface (26) of the skin and the frame (12), and
- the expansion and hardening of the foaming material to form the foam layer (16).

10. The method according to claim 9, **characterized in that** before the step for introducing the foaming material into the interior volume (28), the placement step comprises introducing a protrusion (130) into the interior volume (28) opposite the illuminating device (30), the frame (12) and the foam layer (16) defining, after hardening of the foaming material, a cavity (114) in the space occupied by the protrusion (130) during the foaming step, the placement step also comprising the provision of a central region (116) of the foam layer (16) and the frame (12) with a shape substantially complementary to that of the cavity (114) and the removable fastening of the central region (116) in the cavity (114).
